# EUROPEAN PATENT APPLICATION

(11) **EP 4 321 695 A1**
(43) Date of publication of application: **14.02.2024**
(21) Application number: 22382772.6
(22) Date of filing: 09.08.2022
(51) Int. Cl.: E02F 9/28, F16B 21/18

(54) **PIN**

(71) Applicant: Metalogenia Research & Technologies S.L., 08005 Barcelona (ES)
(72) Inventor: Pérez Soria, Francisco, 08430 La Roca del Valles (Barcelona) (ES); Rol Corredor, Javier, 08930 St Adrià del Besós (ES)
(74) Representative: Carlos Hernando, Borja

(57) **Abstract**

The invention relates to a pin for the coupling between a tooth and an adapter of earth-moving machines, having an elongated body of revolution around an axis and being inserted between the tooth and the adapter to secure the coupling between both. The pin object of the present invention has a particular configuration on the contour or perimeter of at least one of its two ends.

## Description

### Object of the invention

The present invention relates to a pin for the coupling between a tooth and an adapter of earth-moving machines, having an elongated body of revolution around an axis and being inserted between the tooth and the adapter to secure the coupling between both. The tooth is typically a hollow body with at least two opposite side walls provided with holes, such that the nose of an adapter provided with a through channel is inserted into said hollow body, said through channel being aligned with the holes of the tooth when the tooth is assembled on the adapter. The pin is inserted through one of the two holes of the tooth, thus traversing the assembly. The assembly typically comprises retention means to secure the position of the pin between the tooth and the adapter and to retain same in said position. The pin object of the present invention has a particular configuration on the contour or perimeter of at least one of its two ends.

The present invention is particularly applicable in the public works sector, such as in excavations and mining.

### Background of the invention

Excavator machines and the like, such as those used in public works, quarries, dredging and mining works, are used to pull out, move and load earth and stones. These machines are usually provided with a bucket attached to a mechanical arm. The bucket is provided with a blade or bevelled lip on a front edge intended for cutting into and penetrating the mass of earth and stones. To prevent excessive wear of the blade and to help penetrate the earth, it is common to assemble teeth associated with the blade which project from the front edge thereof. However, said teeth also are subjected to wear and breakage, so they must be replaced often, and additionally, depending on the work to be performed by the machine, it may be desirable to change the type or the shape of the teeth. This replacement is facilitated by using an adapter, which is fixed to the blade of the bucket in a more or less permanent manner, and teeth, such that each tooth is releasably assembled on the adapter by means of a pin. Typically, said pin traverses holes of the tooth and a channel traversing the adapter in order to fix the tooth to the adapter, thus guaranteeing the connection between both using a retention device to fix said pin in its assembly position and thus preventing the pin from coming out of its position when the machine is working and the tooth/adapter/pin system receives significant stressing. The holes in the tooth are positioned on opposite walls, and said walls can be arranged on side surfaces of the tooth, such that the pin is inserted horizontally, or on the upper and lower surfaces, such that the pin is inserted vertically.

When the tooth is assembled on the adapter and the pin located in its assembly position, i.e., in a locking position locking the tooth onto the adapter, the ends of the pin are located in the holes of the tooth and the central part of the pin is located in the channel of the adapter. Inverted systems typically used in dredging operations are also known, wherein the adapter incorporates the hollow space where the tooth is inserted, such that it is the adapter that incorporates opposite walls with holes and the tooth incorporates the nose with the channel for inserting the pin.

In addition, between the cavity of the tooth and the nose of the adapter, or in inverted systems between the nose of the tooth and cavity of the adapter, there is a fitting surface which, when the tooth/adapter assembly is working, the tooth tends to rotate with respect to the adapter and with the centre of rotation on the axis of the pin, causing the fitting surfaces of the tooth and of the adapter to contact one another, exerting significant pressures. Depending on the direction of the forces applied at the tip of the tooth while working, contacts are created between the pin, tooth and adapter with a force equivalent to the force exerted by the terrain on the tip of the tooth, creating reactions which tend to uncouple the tooth from the adapter. The pin locks the tooth and prevents it from falling out, namely, the pin withstands the pushing of the tooth at its ends, supported on the inner walls of the holes of the tooth, while the adapter fixes/locks the pin from its central position. In this situation, the pin is subjected to stressing pulling on its ends but being locked in the central area thereof, and this stressing can be so great that it bends the pin. When the pin bends, its axis of rotation goes from being a straight line to being a curved line, such that since the axis of rotation is not a straight line, it causes the pin to be unable to be rotated when said pin is to be rotated in order to remove it and subsequently disassemble the tooth from the adapter, making removal thereof from the assembly difficult when the tooth needs to be replaced due to wear.

Fixing systems comprising at least one pin and at least one retention device or element normally have elastic features, which are provided to the fixing system through the retention device, for the pin to be able to be fixed and released without requiring said pin to be broken, while at the same time allowing its insertion into and removal from the system in a simple, preferably hammerless, manner, i.e., without the need for a hammer, so the system is more secure.

For assembling and disassembling the pin, fixing systems usually require a tool causing the rotation of the pin inside its housing between the tooth and the adapter, such that one or both ends of said pin are housed in the retention device of the system. Said retention device is typically formed by two metallic elongated bodies which determine a space between them in which an end of the pin is housed, namely, said elongated bodies are inserted in two opposite notches arranged on the body of the pin. Said retention device can be secured to the tooth or the adapter. Examples of said retention systems are described in patent applications WO201304858A1 and WO2017137619A1.

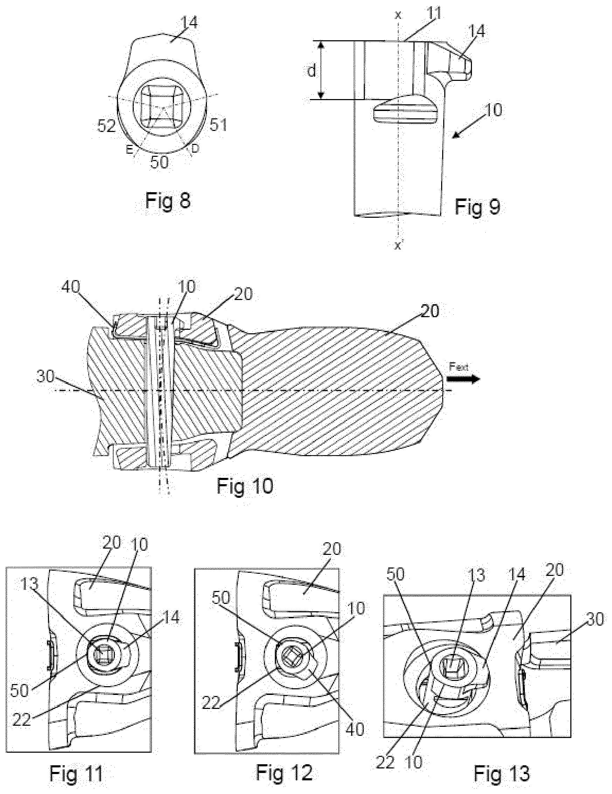

As previously mentioned, while the tooth-adapter-pin assembly is working, the pin may bend, affecting the disassembly thereof from the assembly formed by the tooth and pin. To disassemble the pin, said pin will have to be rotated, and if the pin was bent while working, it is harder to move it because the axis of rotation no longer coincides with the axis of revolution of the pin, i.e., said axis of rotation is no longer linear (see bent axis x' in Figure 10 opposite straight axis x in the same figure).

The present invention allows the disassembly of the pin even though it has been bent while working, such that when the rotation to release the pin commences, contact between the tooth and the pin disappears, and after said point of disappearance of contact, the rotation for removal of the pin can be performed without resistance as there is no friction between the tooth and the pin.

### Description of the invention

In order to overcome the mentioned drawbacks to facilitate disassembly of the pin in an assembly formed by a tooth and an adapter, for the subsequent replacement of the tooth, a first object of the present invention is a pin according to claim 1.

Namely, the invention relates to a pin for the coupling between a tooth and an adapter of earth-moving machines, with said pin being formed by a single elongated body of revolution with respect to an axis of revolution. The pin has actuation means for a tool at at least one of its two ends. Said pin comprises a pressure area at at least one of the two ends of the body of the pin, with a length that is less than the total length of the elongated body (L), and has along the entire length of said pressure area sections perpendicular to the axis of revolution determining a central point at the intersection between the axis of revolution and the sections, with said sections being delimited by a contour line which is characterised in that it comprises:
- a first segment formed by a first arc, between a first point and a second point, with a centre at the central point,
- a second segment after the first point and the first segment, wherein the points forming the contour line in said second segment are located at a distance from the central point that is less than the radius of the first arc.

Alternatively, a third segment is arranged in the contour line after the second point and the first segment, wherein the points forming the contour line in said third segment are located at a distance from the central point that is less than the radius of the first arc. This configuration of the pin occurs before being used together with the tooth and the adapter, given that after the work of the assembly, the pin may be deformed, specifically, bent, and the pressure area may not have all its sections perpendicular to the axis of revolution of the pin.

This pressure area represents the area in which the pin will contact the tooth, specifically, with the inner walls of the hole, or holes, of the tooth being traversed by the pin for the coupling thereof in the assembly formed by the tooth and the pin. Particularly, said pressure area will have a length similar to the thickness of the side wall of the tooth where the mentioned hole or holes is/are positioned. Depending on the type of work for which the tooth is intended, as well as the size thereof, the tooth will have one or two holes, on opposite walls, for the insertion of the pin. Likewise, the wall of the hole of the tooth is preferably circular or preferably almost circular, at least in the area in which the pin contacts in order to thus assure contact between both; based on the area where they contact each other, the hole of the tooth may not be circular, for example, it may be oval-shaped. Typically, said holes are not circular.

The existence of a second and/or third segment will depend on the direction of rotation of the pin for the removal thereof, such that, if it is rotated in only one direction, it will only be necessary to provide, in addition to the first segment, the second segment, but if the pin can rotate in both directions, the pin will need to incorporate a third segment as well, such that said second and third segment are each arranged after an end of the first segment.

In addition to the preceding segments, the contour line can have other segments, for example, a fourth segment joining the ends of the second segment and the third segment.

Said pressure area is arranged at either of the two ends of the body of the pin, but it will preferably be arranged at the end of the pin where there are preferably positioned actuation means for a tool which allows the rotation of the pin to be activated. Preferably, said means actuation are a housing for the insertion of a tool which allows the rotation of the pin for assembly and disassembly thereof. Alternatively, the actuation means for a tool are a projection. Likewise, the two ends of the body of the pin can have a pressure area with the same characteristics as those highlighted above, such that disassembly of the pin is facilitated as it is possible to act on both ends of the pin, even at the same time. Preferably, both ends of the pin have a pressure area such as the one described above.

The length of the first arc is between 5 % and 20 %, preferably between 10 % and 15 %, of the total length of the contour or perimeter of the area of contact of the pin. Likewise, the length of the pressure area along the body of the pin is between 5 % and 20 %, preferably between 10 % and 15 %, of the total length of the pin (L).

The surface of the area of contact of the pin can include a projection, preferably on the surface opposite the first arc of the pressure area, which contributes to the positioning of the pin for insertion in the at least one hole of the tooth and channel of the adapter, contributing to a correct fixing of the pin in the retaining element arranged in the tooth-adapter assembly.

Likewise, in order to be fixed in the retaining element, the pin has on its surface at least two diametrically opposed notches. Said notches are arranged close to the end or ends of the pin, depending on where the retention element or elements are to be located, i.e., on one side or on both sides of the adapter. If the end of the pin comprises a pressure area, the notches are preferably arranged after the pressure area.

The structure of the pin object of the invention especially allows a more favourable and simpler disassembly thereof, mainly when the pin is deformed, after the work of the tooth-adapter-pin assembly. While working, the pin is in contact at its ends with the holes of the tooth, specifically, with the inner walls of said holes, and is pushed outward at said ends by the tooth and said outward pushing locked by the adapter, causing same to arch between the two pressure areas with the tooth. Due to the configuration of the structure of the at least one pressure area of the pin, the pin is secured upon pressing on two opposite points or lines of the inner wall of the hole of the tooth when the pin is inserted in the working position. Namely, the pin will be in contact at at least one point of the first segment of a section and at least one diametrically opposed point with respect to the central point, preferably along the length of the pressure area, but when the pin is rotated for the removal thereof less than 90°, the mentioned contact at said points of the hole of the tooth is lost, thus facilitating disassembly of the pin. The way to assemble the pin will depend on the tooth-adapter assembly and on the retention device used by the assembly, although independently of the tooth-adapter assembly, several steps are similar. The main steps for the assembly of the pin are:
- the pin is inserted in the housing formed by the holes of the tooth and the channel of the adapter, pushing the pin into said hole, where it enters with certain clearance; and
- once it is partially inserted, said pin is pushed to finish being inserted in said housing until the notches of the pin reach the retainer, at which time a click-like sound made when the pin is inserted between two substantially parallel arms of the retention device will indicate that the pin has been locked. The pin will be in contact with the walls of the hole of the tooth through the first segment of the pressure area and a diametrically opposed point or line with respect to the first segment, while the second and third segments will not be in contact with the walls of the hole, they will be on both sides, and after said contact, without any purpose during the service life of the tooth. The mentioned contact between the pin and the walls of the hole of the tooth is only assured when the system starts to work, because if there is no stressing, the mentioned reactions causing the removal of the tooth do not occur. It is possible, only during assembly, for there to be no contact between the pin and the inner surfaces of the hole or holes of the pin.

The reference for the correct position of the pin in the housing is preferably the mentioned projection located opposite the first segment of the pressure area of the pin.

After the work of the assembly, the pin will more than likely arch due to the stressing to which the tooth is subjected, which tooth tends to be ejected from the adapter, causing the pin to arch when pulling the tooth of the pin outwards. As the pin bends, the clearance initially existing upon insertion thereof in the tooth and adapter assembly partially disappears.

To disassemble the tooth and adapter assembly, the pin must be removed from its housing, and to that end the following steps must be followed:
- Rotate the pin at least 90° in one of the two directions of rotation to eliminate contact between the pin and the tooth. Depending on the design of the pin and coupling assembly, the pin can rotate in one direction, in the opposite direction or in both directions. In the event of a coupling assembly between a tooth and adapter which allows the rotation of the pin in both directions, said pin will have the first segment, the second segment and the third segment. By means of the rotation of the pin, the first segment no longer has contact with the tooth, specifically, with the inner wall of the hole of the tooth, and the second or third segment allow there to be clearance between the pin and the tooth. The function of said second and third segment of the pin is to prevent friction due to contact between the end or ends of the body of the pin and the walls of the holes of the tooth for 90°, as occurs in the prior art pins already described. After the work, the pin is deformed and the angle of rotation no longer corresponds with the axis of the channel of the adapter and the axis of the holes of the tooth, such that having to drag the pin in contact with the tooth for said 90° is what makes removal of the pin difficult and costly, particularly in high compaction applications. By means of the present invention, with a rotation less than said 90°, possibly with a fourth of said 90° or less, contact between pin and tooth is released, facilitating the remaining rotation needed until the pin is unlocked.
- Once contact between the pin and tooth through the second or third segment is released, the pin can be removed from the channel, and the tooth can accordingly be removed from the adapter.

As mentioned, the pin has at least actuation means for a tool, preferably a housing for the insertion of a tool facilitating the rotation of the pin during disassembly, and likewise has a projection that comes into contact with ramps located on the tooth and facilitating the removal thereof, given that upon rotation of the pin, the projection slides on said ramps which move it outwards. Preferably a conical shape of the pin even further facilitates the removal thereof from its housing.

Preferably the tooth incorporates holes on opposite walls, and said walls can be positioned on the side surfaces of the tooth, such that the pin is inserted horizontally, or on the upper and lower surfaces, such that the pin is inserted vertically. Likewise, despite the present invention referring to the tooth incorporating the holes for the insertion of the pin and the adapter incorporating the channel, it is possible for the adapter to incorporate the hollow space where the tooth is inserted, such that the adapter incorporates the opposite walls with the holes and the tooth incorporates the nose with the channel for the insertion of the pin. This latter construction usually arises in systems used in dredging operations.

A second object of the invention is a system for the coupling between a tooth and an adapter of earth-moving machines, formed by a tooth, an adapter and a pin such as the one described above, where at least two opposite walls with through holes and a nose with a channel are arranged, with said holes and nose being traversed by the pin.

### Description of the figures

To facilitate understanding of the present invention, the following figures are attached:
Figure 1 shows a perspective view of an assembly formed by a tooth, an adapter and a pin object of the present invention.
Figure 2 shows a perspective view of a pin object of the present invention in the nose of an adapter.
Figure 3 shows a perspective view of the housing of a tooth with two holes for receiving a pin and with a retaining element coupled to one of the inner walls of the cavity of the tooth.
Figure 4 shows the view of Figure 3 with a pin object of the invention inserted in the holes of the tooth, as well as in the retaining element.
Figure 5 shows a perspective view of a pin object of the present invention.
Figure 6 shows another perspective view of a pin object of the present invention.
Figure 7 shows a side view of a pin object of the present invention.
Figure 8 shows an elevational view of an end of a pin object of the present invention, showing the pressure area.
Figure 9 shows a detail of an end of a pin object of the present invention, showing the pressure area.
Figure 10 shows a section, along the axis of rotation of the pin object of the present invention, of an assembly formed by a tooth, an adapter and a pin.
Figure 11 shows a partial side view of a tooth, adapter and pin assembly when the pin is in position to work, with the pressure area of the pin in contact with the inner wall of the hole of the tooth.
Figure 12 shows a partial side view of a tooth, adapter and pin assembly when the pin is in position to be removed, i.e., with the pressure area of the pin not being in contact with the inner wall of the tooth.
Figure 13 shows a partial side view of the pin partially removed.
Figure 14 shows an elevational view of an end of an alternative pin object of the present invention, showing the pressure area.
Figure 15 shows an elevational view of an end of another alternative pin object of the present invention, showing the pressure area.
Figure 16 shows an elevational view of an end of an alternative pin object of the present invention, showing the pressure area.
Figure 17 shows an elevational view of an end of an alternative pin object of the present invention, showing the pressure area.
Figure 18 shows an elevational view of an end of an alternative pin object of the present invention, showing the pressure area.
Figure 19 shows a perspective view of another pin object of the present invention with a second alternative end.
Figure 20 shows a perspective view of another pin object of the present invention with a second alternative end with notches.
Figure 21 shows a perspective view of another pin object of the present invention with a first end with actuation means for actuating a tool in the form of projection.

### Preferred embodiment

The present invention will be described below in reference to the attached figures.

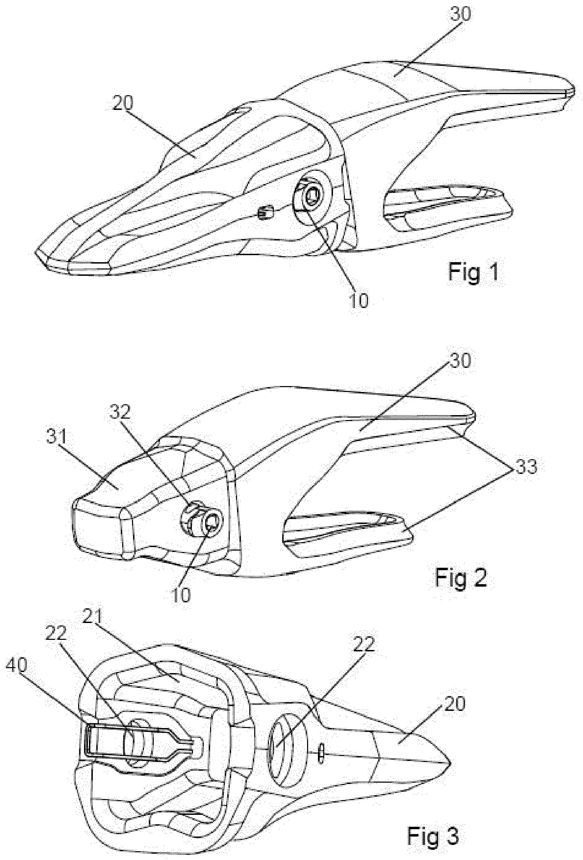

Figures 1 to 4 show the different components of a tooth (20) and adapter (30) coupling assembly for moving earth and rocks. This assembly is preferably coupled, through the rear part (33) of the adapter (30) to a bucket of a shovel of a rock and earth-moving machine. The coupling between parts is performed by inserting the nose (31) of the adapter (30) in the cavity (21) of a tooth (20). Once the adapter (30) and tooth (20) are coupled, are aligned the holes (22) located on two opposite walls of the tooth (20) and the channel (32) traversing the nose (31) of the adapter (30). The tooth (20) may include only one hole (22) in one of its walls. Likewise, the tooth (20) has inside the cavity (21), associated with at least one of its walls having a hole (22), a retaining element (40) formed by two, preferably metallic, parallel elongated arms (41) crossing through the hole (22). If the tooth (20) has two holes (22), it could incorporate a retaining element (40) in each of the walls, crossing through each of the holes (22).

To secure the coupling between the tooth (20) and the adapter (30), a pin (10) is inserted through one of the holes (22) of the tooth (20) until the pin (10) traverses the retaining element (40), thus securing the coupling of the tooth (20), adapter (30) and pin (10) assembly. The pin (10) has at one end of its surface at least two opposite notches (15) in which the arms (41) of the retaining element (40) are inserted upon insertion of the pin (10) between said arms (41). When the arms (41) are inserted in the notches (15) of the pin (10), they give off a sound when the arms (41) hit against the bottom of the notch (15), said sound being a "click"-like sound, assuring the correct positioning of the pin.

Alternatively, the pin (10) can incorporate the pair of notches (15) at either of the two ends of its surface or include a pair of notches (15) at each of the two ends of its surface, depending on the assembly formed by the tooth (20) and the adapter (30) which will be chosen depending on the work to be performed.

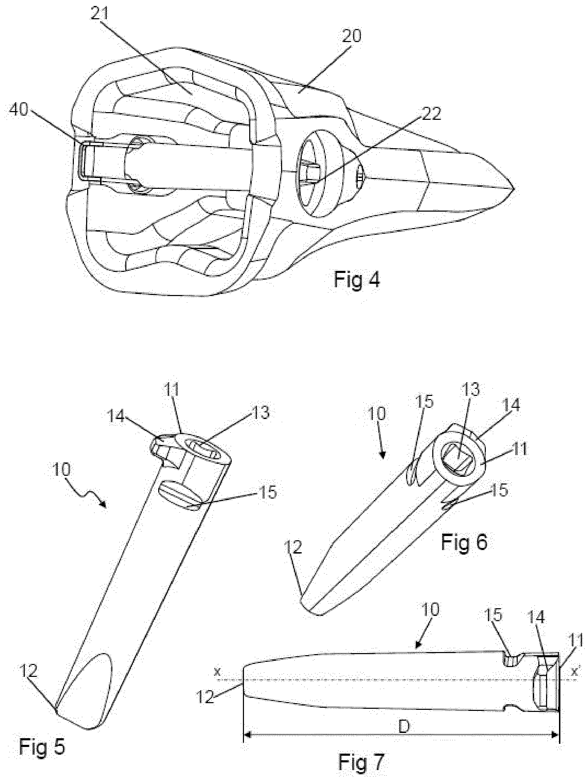

An embodiment of the pin (10) object of the invention is depicted in Figures 5 to 9. Namely, a pin (10) formed by a single elongated body of revolution with respect to an axis of revolution (x) is depicted. The pin (10) has a housing (13) at a first end (11) of its two ends, for the insertion of a tool which helps in the removal of the pin from the assembly formed by the tooth (20) and adapter (30). Likewise, that same first end (11) incorporates a projection (14) which contributes to both the positioning of the pin (10) for insertion in the tooth (20) and adapter (30) assembly, as well as to sliding on ramps in the hole (22) of the tooth (20) to facilitate removal of the pin (10) when the latter is rotated. The second end (12) of the pin (10) opposite the first end (11) has two inclined surfaces resulting from the cut out of the conical or cylindrical surface of the pin (10) by two inclined planes on opposite sides of the surface of the pin (10). This form of the second end (12) facilitates insertion of the pin (10) between the arms (41) of the retaining element (40).

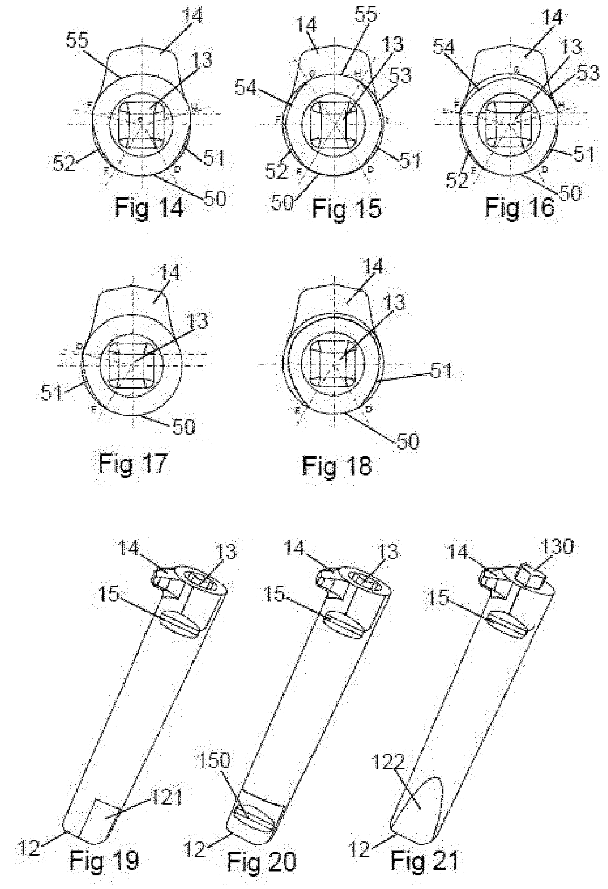

Figures 19 to 21 show alternative forms of the pin. Namely, Figure 19 shows a pin with a different second end (12) with a cut out (121) made by an inclined plane. Figure 20 shows a pin having notches (150) at its second end in addition to the notches (15) at the first end (11). Figure 21 depicts another pin like the pin of Figure 5 which instead of having a housing (13) like the previous pins, has a projection (130) as actuation means for a tool. The pin of this Figure 21 also has a cut out (122) made by an inclined plane. It should be mentioned that the pin preferably has a pressure area at each of its two ends, depicted in these figures by the inclined cut outs (121, 122).

The pin (10) comprises a pressure area with the tooth (20), specifically, with the inner walls of the hole (22) of the tooth (20), at the first end (11). The length (d) of said pressure area is less than the total length (L) of the elongated body of the pin (10). Said pressure area has along the entire length (d) sections perpendicular to the axis of revolution (x) determining a central point (O) at the intersection between the axis of revolution (x) and said sections. The sections of the body of the pin (10) are delimited by a contour line or perimeter line comprising:
- a first segment (50) formed by a first arc (DE), between a first point (D) and a second point (E), with a centre at the central point (O),
- a second segment (51) after the first point (D) and after the first segment (50), wherein the points forming the contour line in this second segment (51) are located at a distance from the central point (O) that is less than the radius of the first arc (50), which radius is equivalent to the distance between the central point (O) and the first point (D) or equivalent to the distance between the central point (O) and the second point (E), and
- a third segment after the second point (E) and after the first segment (50), wherein the points forming the contour line in this second segment (51) are located at a distance from the central point (O) that is less than the radius of the first arc (50), which radius is equivalent to the distance between the central point (O) and the first point (D) or equivalent to the distance between the central point (O) and the second point (E).

The structure and configuration of the pin (10) facilitates disassembly of the pin (10) from the assembly formed by the tooth (20), adapter (30) and pin (10) after the work performed by same. As can be observed in the system of Figure 10, while working the pin (10) is in contact at its ends (11, 12) with the inner walls of the holes (22) of the tooth (20). The pressure area of the pin (10) has a length (d) approximately equal to the width of the hole (22) of the tooth (10) as this is the area of the pin (10) that is in contact with the tooth (10). During said work, the tooth (10) is pushed outward, in the direction of the arrow F.ext, which causes the ends (11, 12) of the pin (10), supported in the holes (22) of the tooth (20), to also be pushed in the same direction as the tooth (20) while the central area of said pin (10) is located inside the channel (32) of the adapter (30). Said forces on the ends (11, 12) of the pin (10) cause the latter to arch between the two pressure areas with the holes of the tooth (10), causing the pin (10) to bend. Thus, the axis of rotation (x) of the pin (10) can become, after being arched while working, a curved line (x') which would make it difficult to remove same were it not for a pressure area with a perimeter or contour line like the one described above. That is because in order for the pin to rotate once it is bent after the work, and by having a curved axis, the pin needs more space for rotation that does not exist because it is located inside the channel of the adapter and in the holes of the tooth, such that after friction in the rotation between the holes of the tooth and the pressure area of the pin, the pin is no longer in contact with the tooth, thereby eliminating friction and facilitating rotation thereof.

The length of the pressure area (d) is between 5 % and 20 % of the total length (L) of the body of the pin (10) and is preferably between 10 % and 15 % of the total length of the body of the pin (L). Said length of the pressure area (d) will depend on the type of tooth and adapter forming the work assembly.

Figure 11 shows the first end (11) of the pin (10) in its working position, where the arms (41) of the retaining element (40) are located inside the notches (15) of the pin (10), and therefore the pin (10) is retained in the assembly formed by the tooth (20) and the adapter (30). The first arc (DE) or first segment (50) of the pressure area is exerting pressure on the inner wall of the hole (22) of the tooth.

To be able to remove the pin (10) (Figure 12), said pin must be rotated in one of the two directions shown in Figure 11 for the arms (41) of the retaining element (40) to come out of the notches (15) of the pin (10), thus releasing same and enabling the removal thereof. However, since the pin (10) has been bent during the work of the tooth (20)/adapter (30) assembly, said rotation is not as simple to perform unless the perimeter or contour line of the pressure area of the pin (10) is rectified as described. By changing the form of the contour or perimeter line of the pressure area of the pin (10), once said pin (10) is rotated inside the hole (22) of the tooth (20), the first segment (51) is no longer in contact with the tooth (20), the second segment (51) or third segment (52), depending on the direction of rotation, now facing the part of the hole (22) of the tooth (20) with the first segment (51) of the pin (10) came into contact. Said second segment (51) and third segment (52) allow there to be a clearance between the pin (10) and the inner wall of the tooth (20), preventing friction due to contact between the pressure area at the first end (11) of the body of the pin (10) and the wall of the hole of the tooth. Thus, by means of the present invention, with a rotation less than said 90°, possibly with a fourth of said 90° or even less, contact between pin (10) and tooth (20) is released, facilitating the remaining rotation needed until the pin (10) is unlocked.

In particular, the length of the first arc (ED), coinciding with the length of the first segment, is between 5 % and 20 % of the total length of the contour line or perimeter line, preferably between 10 % and 15 % of said line.

Once the pin (10) is rotated, the arms (41) of the retaining element (40) come out of the notches (15) of the pin (10), and the latter is slightly shifted outwards by the compressive action of the arms (41) on the second end (12) of the pin (10) (see Figure 13).

Figures 14 to 18 show alternative solutions to the pressure area of the invention, where different configurations of at least a second segment (51) that interacts with the first segment (50) or configurations with a second segment (51) and a third segment (52) are observed. Figures 14 to 18 show a pin (10) having at its first end (11) a housing (13) as actuation means for actuating a tool.

In that regard, like Figure 8, Figure 14, shows a pressure area, which is symmetrical with respect to a line passing between the centre O and half of the arc (DE) of the first segment (50), with a first segment (50) - arc DE, a second segment (51) - arc GD, a third segment (52) - arc FE and a third segment (53) - arc FG, between the second and third segments. The radius of the fourth segment (53) may be equal to the radius of the first segment (50). By having a second segment (51) and a third segment (52) on both sides of the first segment (50), the pin (10) may be rotated for the removal thereof from the assembly formed by the tooth (20) and adapter (30), in either of its two directions of rotation.

Figure 15 shows a pressure area, which is symmetrical with respect to a line passing between the centre O and the half of the arc (DE) of the first segment (50) - arc DE, also with a second segment (51) - arc ID and third segment (52) - arc EF segments, but which furthermore has a fourth segment (53) - arc IH, fifth segment (54) - arc FG and sixth segment (55) - arc GH. The radius of the sixth segment (55) opposite the first segment (50) could have the same radius. The second to fifth segments have a radius that is less than the radius of the first and sixth segments. This pressure area of this pin is also symmetrical with respect to the axis passing between the first segment (51) and third segment (53) and the second segment (52) and fourth segment (54), between points F, O and I. Like in the example of Figure 14, this pin would be suitable for being removed by rotating for both sides.

Figure 16 shows another design of an alternative pressure area. This is similar to that of Figure 14 but with a fourth segment (53) - arc (GH) and a fifth segment (54) - arc FG. Like in the examples of Figures 14 and 15, this pin would be suitable for being removed by rotating for both sides.

Figure 17 shows a pin with a contact area with only two segments, a first segment (50) - arc ED and a second segment (51) - arc ED. The length of the first segment (50) is, in this case, much larger, almost three fourths of the circumference of the pin (10), and a second segment (51) having a smaller length than the first segment (50). This pin is not symmetrical and may only be removed from its location by means of rotating same in a single direction.

In Figures 14, 16 and 17 two parallel axes, one crossing the centre O and the other one crossing at least one point (D or G or H) of the second segment (51) and/or one point (F) of the third segment (52) are observed, such that it is shown that the points of the second segment (51) and third segment (52) do not necessarily have to be on the axis passing through the centre O.

Figure 18 shows another pressure area design, where in addition to the first segment (50), there is only a second segment (51) with the same radius that is less than the radius of the first segment (50).

To cause the pin (10) to rotate, preferably a tool which is inserted in the housing (13) of the first end (11) of the pin (10) or which secures the projection (130) at said first end (11) of the pin (10) as shown in Figure 21 in an alternative manner, is used.

## Claims

1. A pin for the coupling between a tooth and an adapter of earth-moving machines, formed by a single elongated body of revolution with respect to an axis of revolution (x), with two ends, and comprising at least one pressure area at at least one of the two ends of the body, with the length of said pressure area being less than the total length of the elongated body, and said pressure area having along its entire length sections perpendicular to the axis of revolution (x) determining a central point (O) at the intersection between the axis of revolution (x) and the sections, with said sections being delimited by a contour line which is **characterised in that** it comprises:
- a first segment formed by a first arc (ED), between a first point (E) and a second point (D), with a centre at the central point (O), and
- a second segment after the first point (E) and the first segment, wherein the points forming the contour line in said second segment are located at a distance from the central point (O) that is less than the radius of the first arc (ED).

2. The pin according to claim 1, **characterised in that** it comprises a third segment after the second point (D) and the first segment, wherein the points forming the contour line in said third segment are located at a distance from the central point (O) that is less than the radius of the first arc (ED).

3. The pin according to claim 1, **characterised in that** it comprises actuation means for a tool at at least one of its two ends.

4. The pin according to claim 3, **characterised in that** the actuation means for a tool are a housing for receiving a tool.

5. The pin according to any of the preceding claims, **characterised in that** each of the two ends of the body of the pin has a pressure area.

6. The pin according to claim 4, **characterised in that** the housing for receiving a tool is arranged at the end where the pressure area is positioned.

7. The pin according to any of the preceding claims, **characterised in that** the length of the first arc (ED) is between 5 % and 20 % of the total length of the contour line.

8. The pin according to claim 7, **characterised in that** the length of the first arc (ED) is between 10 % and 15 % of the total length of the contour line.

9. The pin according to any of the preceding claims, **characterised in that** the length of the pressure area is between 5 % and 20 % of the total length of the body of the pin.

10. The pin according to claim 9, **characterised in that** the length of the pressure area is between 10 % and 15 % of the total length of the body of the pin (L).

11. The pin according to any of the preceding claims, **characterised in that** it comprises a projection in the pressure area in a position opposite the first arc (ED).

12. The pin according to any of the preceding claims, **characterised in that** it comprises on the surface of at least one of the two ends of the body two diametrically opposed notches.

13. The pin according to claim 8, **characterised in that** said notches are arranged after the pressure area.

14. A system for the coupling between a tooth and an adapter of earth-moving machines comprising a tooth and an adapter, with at least two opposite walls with through holes and a nose with a channel in which a pin according to claim 1 is inserted.
